**Europäisches Patentamt**

(19) **European Patent Office**

**Office européen des brevets**

(11) Veröffentlichungsnummer: **0 056 146**
**B1**

(12) # EUROPÄISCHE PATENTSCHRIFT

(45) Veröffentlichungstag der Patentschrift:
**26.02.86**

(21) Anmeldenummer: **81110763.0**

(22) Anmeldetag: **24.12.81**

(51) Int. Cl.⁴: **B 28 C 5/06,** B 28 C 5/40,
B 28 C 7/16, E 01 C 19/46,
E 04 F 21/12, E 21 D 11/10,
B 01 F 5/02

(54) Verfahren zur Herstellung von elastischem Beton oder Mörtel.

(30) Priorität: **10.01.81 DE 3100571**

(43) Veröffentlichungstag der Anmeldung:
**21.07.82 Patentblatt 82/29**

(45) Bekanntmachung des Hinweises auf die Patenterteilung:
**26.02.86 Patentblatt 86/9**

(84) Benannte Vertragsstaaten:
**BE CH DE FR GB LI**

(56) Entgegenhaltungen:
**CH - A - 406 024**
**DE - A - 2 514 420**
**FR - A - 2 108 461**
**US - A - 2 543 517**
**US - A - 4 047 967**

(73) Patentinhaber: **BAYER AG, Konzernverwaltung RP**
**Patentabteilung, D-5090 Leverkusen 1 Bayerwerk (DE)**

(72) Erfinder: **Esser, Heinz, Dr., Am Jungholzkamp 7,**
**D-5093 Burscheid (DE)**
Erfinder: **Schmidt, Rudolf, Dipl.-Ing., Am**
**Jungholzkamp 22, D-5093 Burscheid (DE)**

LIBER, STOCKHOLM 1986

## Beschreibung

Elastischer Beton oder Mörtel sind als Werkstoffe bekannt. Sie werden aus Gemischen von Tonerdeschmelz-Zement, Portland-Zement, Hochofen-Zement oder anderen hydraulischen Bindemitteln wie beispielsweise wasserfreies Calciumsulfat, hydraulischer Kalk oder Traß mit Sand durch Zusatz geeigneter wäßriger kautschuk- oder Kunststoff-Dispersionen (Latices) hergestellt. Die zum hydraulischen Aushärten des elastischen Beton oder Mörtel benötigte Menge Wasser wird durch das in der jeweils verwendeten Dispersion enthaltene Wasser bereitgestellt.

Durch die Vergütung von Sand-Zementmischungen oder Sand-hydraulische Bindemittelmischungen mit Kautschuk- oder Kunststoff-Latices werden maßgebliche physikalische Eigenschaften des Betons oder Mörtels verbessert, u.a. ergibt sich eine höhere Flexibilität, eine höhere Schlagzähigkeit und eine bessere Haftung des Betons oder Mörtels an Substraten (u.a. Stahl, Fels, Mauerwerk).

Elastischer Beton hat viele Anwendungsgebiete, u.a. als Schiffsdeckbelag, für Industriefußböden, für Zwecke der Schallisolation, zur Verkleidung von starken Rohrleitungen, für Brückenbeläge und spezielle Fahrbahndecken.

Beton kann nach verschiedenen Verfahren hergestellt und verarbeitet werden. Beim Torkretverfahren wird ein Gemisch von Sand und Zement mit Druckluft durch eine Rohrleitung gepreßt, an deren Austrittsende dem Gemisch Wasser durch Düsen zugesetzt wird. Die Masse wird in mehreren Lagen aufgespritzt, die sich infolge des hohen Preßluftdruckes gut miteinander verbinden. Das Torkretverfahren wird u.a. zur Herstellung eines sehr dichten Verputzes, zur feuerhemmenden Umkleidung von Stahlbetonkonstruktionen und zur Ausbesserung beschädigter Bauteile aus Beton oder Stahlbeton z.B. Tunnel, Decken usw. angewendet.

Nach dem erfindungsgemäßen Verfahren wird ein Torkretgerät benutzt, bei dem Zement oder andere hydraulische Bindemittel und Sand wie zuvor beschrieben, gefördert werden und wo anstelle des Wassers eine wäßrige Kautschuk- oder Kunststoff-Dispersion am Austrittsende des Rohres durch Düsen zugesetzt wird. Auch in diesem Fall wird das zum hydraulischen Aushärten des Betons oder Mörtels benötigte Wasser durch das in der Dispersion enthaltene Wasser zugeführt.

Gegenstand der Erfindung ist somit ein Verfahren zur Herstellung von elastischem Beton oder Mörtel durch Vermischen von Zement oder einem anderen hydraulischen Bindemittel, Sand und einer wäßrigen Kautschuk- oder Kunststoffdispersion, dadurch gekennzeichnet, daß man Sand, Zement oder ein anderes hydraulisches Bindemittel mittels Druckluft durch eine Rohrleitung fördert, an deren Austrittsende durch eine Düse eine wäßrige kautschuk- oder Kunststoffdispersion zugesetzt wird. Auf diese Weise tritt eine innige Verbindung beider Förderströme ein.

Die Herstellung und Verarbeitung von elastischem Beton nach dem Torkretverfahren weist gegnüber dem herkömmlichen Mischen im Betonmischer und Aufbringen von Hand auf das Substrat eine Reihe von Vorteilen auf:

1. Konventionelle Mischungen von Zement/Sand-Mörteln mit Kautschuk- oder Kunststoff-Dispersionen weisen in den meisten Fällen eine geringe Beständigkeit und damit kurze Topfzeit auf, wodurch die Verarbeitbarkeit sehr erschwert wird. Um diesen Nachteil zu eliminieren, ist es praktisch immer notwendig, die Mischung durch Zusatz von Stabilisatoren zu stabilisieren. Durch den Zusatz von Stabilisatoren muß man jedoch vielfach andere Nachteile in Kauf nehmen, z.B. geringere Wasserfestigkeit des Betons, verringertes Haftvermögen sowie geringere Flexibilität des Betons auf dem Substrat.

Bei dem erfindungsgemäßen Verfahren beträgt jedoch die Mischzeit nur Sekundenbruchteile bis Sekunden, so daß sich die Frage der Topfzeit erst gar nicht stellt.

2. Konventionelle Mischungen enthalten Lufteinschlüsse. Um die Lufteinschlüsse zu eliminieren, müssen sog. Entschäumer zugesetzt werden, wodurch wiederum wichtige Eigenschaften des fertigen elastischen Betons beeinträchtigt werden können.

Bei der Anwendung des erfindungsgemäßen Verfahrens ergibt sich durch den hohen Preßdruck sofort eine sehr dichte, praktisch hohlraumfreie Schicht, ohne daß ein Zusatz von Entschäumern notwendig ist.

Die Anwendung des erfindungsgemäßen Verfahrens gestattet das Aufbringen von elastischem Beton auch an senkrechten Flächen und an den Unterseiten von Decken und Gewölben im "Überkopfspritz-Verfahren".

Der Kautschukanteil im elastischen Beton oder Mörtel kann in breiten Grenzen variiert werden. Anteile bis zu 50 Gew.-%, bezogen auf Zement oder andere hydraulische Bindemittel, sind ohne weiteres möglich. Dabei kann es bei niedrigen Latexanteilen in der Sand/Zement- oder Bindemittelmischung notwendig sein, dem Latex zusätzlich Wasser zuzusetzen, damit die für den hydraulischen Abbindevorgang notwendige Menge Wasser vorhanden ist.

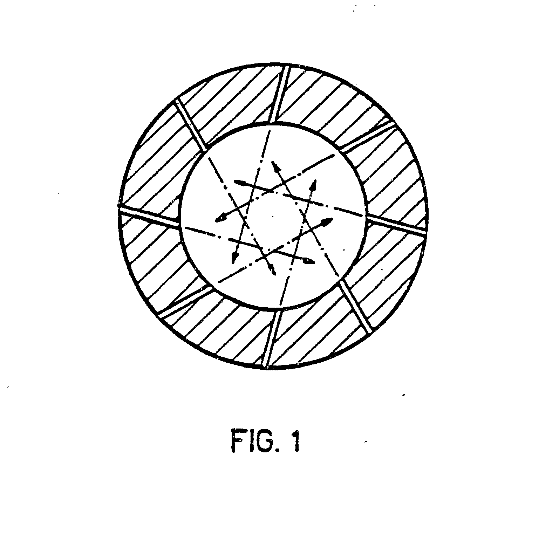

Im Prinzip können die Geräte so, wie sie für das normale Torkretverfahren (Betonspritsverfahren) konstruiert sind, verwendet werden. Es hat sich jedoch als vorteilhaft erwiesen, die Bohrungen der Düse, durch die normalerweise das Wasser und gemäß der Erfindung der Latex zugeführt wird, so zu gestalten, daß der Latex verwirbelt wird. Dabei werden die ursprünglich radialen Bohrungen in eine tangentiale Richtung abgeändert (Abbildung 1). Durch diese Maßnahme wird eine gleichmäßigere Befeuchtung des Sand/Zement- oder Bindemittel-Gemisches mit Latex erzielt und der unvermeidliche Abprall von Sand/Bindemittel auf ein Minimum reduziert.

Nach dem verwendeten Zementtyp richtet sich die zu verwendende Latextupe. Das Heißt, bei Verwendung von Portland- oder Hochofen-Zement verwendet man vorzugsweise kationische oder amphotere Latices, während man bei der Verwendung von Tonerdeschmeiz-Zement vorwiegend anionische oder anionisch/nichtanionische Latices verwendet.

Der Latex bzw. die Kunststoffdispersion besitzt vorteilhafterweise einen Feststoffgehalt von 35–70 Gew.-%.

Als Latices bzw. Kunststoff-Dispersionen wurden bei unseren Versuchen verwendet:

| a) Naturlatex | 60 Gew.-% Feststoffgehalt |
|---|---|
| b) Butadien-Acrylnitril-Latex | 45 Gew.-% Feststoffgehalt |
| c) Styrol-Butadien-Latex | 66 Gew.-% Feststoffgehalt |
| d) Acrylat-Latex | 50 Gew.-% Feststoffgehalt |
| e) anionischer Polychloropren-Latex | 58 Gew.-% Feststoffgehalt |
| f) Polyurethan-Latex | 48 Gew.-% Feststoffgehalt |
| g) kationischer Polychloropren-Latex | 55 Gew.-% Feststoffgehalt |
| h) amphoterer Polychloropren-Latex | 54 Gew.-% Feststoffgehalt |
| i) Polyubtadien-Latex | 49 Gew.-% Feststoffgehalt |
| k) carboxylierter Styrol-Butadien-Latex | 50 Gew.-% Feststoffgehalt |
| l) Vinyl-Pyridin-Latex | 40 Gew.-% Feststoffgehalt |
| m) Polyvinylchlorid-Dispersion | 52 Gew.-% Feststoffgehalt |
| n) Polyvinylacetat-Dispersion | 50 Gew.-% Feststoffgehalt |

Die verwendeten Latices wurden nach in der Literatur beschriebenen Verfahren hergestellt.

Unter Anwendung des Torkret-Spritzverfahrens wurde elastischer Beton mit den vorgenannten Latices mit einem konventionellen Torkretgerät hergestellt. Dabei war lediglich die Düse, durch die der jeweilige Latex zugeführt wurde, wie zuvor beschrieben, abgeändert. In allen Fällen ergab sich eine einwandfreie Vermischung des Sand/Zement-Gemisches mit dem jeweiligen Latex. Das beschriebene Verfahren ließ sich mit sehr gutem Erfolg auch an senkrechten Flächen und in der "Überkopf-Spirtzweise" anwenden.

Bei den beschriebenen Versuchen betrug das Sand/Zement-Gewichtsverhältnis 8:1, der Kautschukanteil im fertigen elastischen Beton lag zwischen 6–10 Gew.-%, bezogen auf Zement.

## Patentansprüche

1) Verfahren zur Herstellung von elatischem Beton oder Mörtel durch Vermischen von Zement oder einem anderen hydraulischen Bindemittel, Sand und einer wäßrigen Kautschuk- oder Kunststoffdispersion, dadurch gekennzeichnet, daß man Sand und ein hydraulisches Bindemittel mittels Druckluft durch eine Rohrleitung fördert, an deren Austrittsende durch eine Düse eine wäßrige kautschuk- oder Kunststoffdispersion zugesetzt wird.

2) Verfahren gemäß Anspruch 1, dadurch gekennzeichnet, daß die Bohrungen der am Austrittsende sich befindenden Düse in tangentiale Richtungen weisen.

## Claims

1. Process for the production of elastic concrete or mortar by mixing cement or another hydraulic binder, sand and an aqueous rubber or plastic dispersion, characterised in that sand and a hydraulic binder are passed through a pipe by means of compressed air, at the outlet end of which pipe an aqueous rubber or plastic dispersion is added through a nozzle.

2. Process according to Claim 1, characterised in that the boreholes of the nozzle located at the outlet end point in tangential directions.

## Revendications

1. Procédé pour la fabrication d'un béton ou d'un mortier élastique par mélange de ciment ou d'un autre liant hydraulique, de sable et d'une dispersion aqueuse de caoutchouc ou de plastique, caractérisé en ce qu'on amème du sable et un liant hydraulique, au moyen d'air comprimé, dans une conduite tubulaire à la sortie de laquelle onajoute, au moyen d'une buse, une dispersion aqueuse de caoutchouc ou de plastique.

2. Procédé selon la revendication 1, caractérisé en ce que les alésages de la buse qui se trouve à la sortie ont des directions tangentielles.

FIG. 1